# EUROPEAN PATENT APPLICATION

(11) **EP 1 044 608 A1**
(43) Date of publication of application: **18.10.2000**
(21) Application number: 99500052.8
(22) Date of filing: 31.03.1999
(51) Int. Cl.: A01N 33/12

(54) **A phtosanitary product comprising quaternary ammonium salts as enhancers**

(71) Applicant: Altinco, S.L., 08950 Esplugas de Llobregat, Barcelona (ES)
(72) Inventor: Colon Auria, José Cristobal, 08950 Esplugas de Llobregart, Barcelona (ES)
(74) Representative: Perez Bonal, Bernardo

(57) **Abstract**

This phytosanitary product includes quaternary ammonium salts in its composition. These salts act as enhancers of other active materials in the preventive or curative treatment of diseases produced by bacteriums and fungus in plants and trees, as well as in the soil disinfection. The composition of this phytosanitary product also includes : copper gluconate, zinc chloride and water.

## Description

### THE OBJECTIVE OF THE INVENTION

This invention refers to a phytosanitary product which particularly includes quaternary ammonium salts in its composition as enhancers of other active materials. This product is used in the preventive or curative treatment of diseases produced by bacteriums and fungus in plants and trees as well as in the soil disinfection.

### BACKGROUND OF THE INVENTION

In certain seasons, plants suffer wounds as a consecuence of the leaf fall, the flower blooming, the hailstorm or other external causes. Due to these facts, because of that, plants remain exposed to infections by bacteriums and fungus.

These infections can damage the trunk, the stem, the leaves, the flowers and the fruits of the plants, and produce the flower and fruit fall or even the plant's death.

Nowadays with the products that are being used, we don't achieve good results in the prevention of this kind of infections. This implies a great cost increace because of the fall of fruits or even the plant's death.

### DESCRIPTION OF THE INVENTION

The objective of this invention is to solve the mentioned problems. This phytosanitary product particularly includes in its composition quaternary ammonium salts, which work as enhancers of other active materials included in that phytosanitary product. Highly satisfactory results are obtained in the prevention of the infections by bacteriums and fungus in plants.

These quaternary ammonium salts have the general formula : 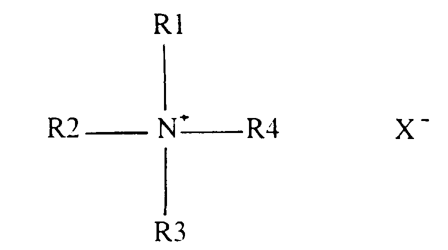 where R1, R2, R3 and R4 can be alcohil radicals just as methyl, decyl, lauryl, bencyl, etc.. and X an hologenated atom (chrome, bromine and iodine).

The most tipical quaternary ammonium salts are the alkyl dimethyl bencyl ammonium chloride and the dimethyl didecyl ammonium chloride. The quaternary ammonium salts have been used as disinfectants of instruments, floors and walls of closed areas ; but they have not been used before in phytosanitary products for the prevention of infections in plants.

This phytosanitary product includes copper gluconate, zinc chloride and water, as well as quaternary ammonium salts.

The weight rates of these components are as follow :
■ Quaternary ammonium salts between 10% and 30%.
■ Copper gluconate between 2% and 10%.
■ Zinc chloride between 1% and 5%.
■ Water between 55% and 87%.

The application of this phytosanitary product to plants, when the possibility of wounds exists, has given satisfactory results in the prevention of infections by bacteriums and fungus, and especially against Psedomonas Syringae in apple trees, pear trees, peach trees, nectarines, tomatos, peppers and marrows, and against Erwinia Amylovora in apple trees and pear trees.

### PREFERABLE EXECUTION OF THE INVENTION

In a practical case of execution, to obtain ten kilogramms of the described phytosanitary product, we will use the following compounds : 2,5 Kg. of alkyl dimethyl bencyl ammonium chloride, 0,8 Kg. of copper gluconate, 0,2 Kg. of zinc chloride and 6,5 Kg. of water.

The alkyl dimethyl bencyl ammonium chloride can opcionaly be replaced by dimethyl didecyl ammonium chloride or by another quaternary ammonium salt that complies with the general formula indicated before.

An expert in these matters will not need a more accurate description of this invention or of its reach and advantatges.

It will be able to introduce changes in the described phytosanitary product, when it is considered appropiated, as long as they don't imply an alteration of the essential characteristics of the invention, which are claimed later.

## Claims

1. A phytosanitary product characterised by the inclusion of quaternary ammonium salts in its composition as enhancers of other active materials in the preventive or curative treatment of diseases produced by bacteriums and fungus in plants and trees as well as in the soil disinfection.

2. A phytosanitary product, according to the previous claim, characterised by the inclusion of quaternary ammonium salts, copper gluconate, zinc chloride and water.

3. A phytosanitary product, according to the previous claims, whose weight rates, in weight, of the different components are: from 10% to 30% of quaternary ammonium salts, from 2% to 10% of copper gluconate, from 1% to 5% of zinc chloride and from 55% to 87% of water.
